# DEMANDE DE BREVET EUROPEEN

(11) **EP 4 443 348 A1**
(43) Date de publication de la demande: **09.10.2024**
(21) Numéro de dépôt: 24165001.9
(22) Date de dépôt: 21.03.2024
(51) Int. Cl.: G06N 20/00, G06N 3/0985

(54) **PROCÉDÉ DE RECHERCHE D'UNE COMBINAISON OPTIMALE D HYPERPARAMÈTRES POUR UN MODÈLE D APPRENTISSAGE AUTOMATIQUE**

(30) Priorité: 03.04.2023 FR 2303291
(71) Demandeur: STMicroelectronics International N.V., 1228 Plan-les-Ouates, Geneva (CH)
(72) Inventeur: Huang, He, 75011 Paris (FR); Wolfrom, Basile, 83130 La Garde (FR)
(74) Mandataire: Casalonga

(57) **Abrégé**

Selon un aspect, il est proposé un procédé mis en oeuvre par ordinateur de recherche d'une combinaison optimale d'hyperparamètres permettant de définir un modèle d'apprentissage automatique, le procédé comprenant plusieurs tests (21) de combinaison d'hyperparamètres, chaque test de combinaison d'hyperparamètres comportant une phase d'entraînement et une phase de test, la phase d'entraînement étant adaptée pour entraîner le modèle d'apprentissage automatique à partir de données d'entraînement et la phase de test étant adaptée pour calculer un score de performance associé à la combinaison d'hyperparamètres testée à partir de données de test le procédé comprenant en outre une définition d'un coefficient de pondération (α) permettant d'ajuster la quantité de données d'entraînement utilisées pour la phase d'entraînement, ledit coefficient de pondération étant adapté dynamiquement (24, 26) au cours des différents tests des combinaisons d'hyperparamètres.

## Description

Des modes de mise en oeuvre et de réalisation concernent l'apprentissage automatique, notamment l'optimisation d'hyperparamètres d'un modèle d'apprentissage automatique.

L'apprentissage automatique (en anglais « machine learning ») est une branche de l'intelligence artificielle qui permet à un système informatique d'apprendre à partir de données, sans avoir été explicitement programmé pour effectuer une tâche donnée.

L'apprentissage automatique permet à une machine d'acquérir des connaissances et des compétences à partir d'un ensemble de données, afin de réaliser des prédictions, des classifications ou d'autres types de traitements sur de nouvelles données.

Un modèle d'apprentissage automatique est une représentation mathématique d'un système ou d'un processus qui permet à une machine d'apprendre à partir des données.

Le modèle est créé en utilisant un algorithme d'apprentissage automatique qui apprend à partir d'un ensemble de données d'entraînement pour produire une sortie prédite pour une entrée donnée.

Le choix du modèle dépend du type de problème à résoudre et des caractéristiques des données disponibles. Il existe différents types de modèles d'apprentissage automatique. On connaît par exemple les modèles linéaires, les arbres de décision, les réseaux de neurones artificiels.

L'apprentissage automatique utilise des hyperparamètres définis pour l'entraînement d'un modèle. Les hyperparamètres sont des paramètres définis avant le début de l'entraînement du modèle.

Les hyperparamètres peuvent par exemple comprendre un taux d'apprentissage (facteur déterminant la taille des pas de mise à jour des poids du modèle pendant l'entraînement), un nombre d'itérations (nombre de fois que le modèle parcourt l'ensemble des données pendant l'entraînement), une structure du modèle (nombre de couches pour un réseau de neurones et le nombre de neurones par couche par exemple).

Les hyperparamètres peuvent avoir un impact significatif sur la performance du modèle. Il convient donc de rechercher, c'est-à-dire optimiser, des hyperparamètres permettant d'améliorer voire d'optimiser les résultats du modèle.

L'optimisation des hyperparamètres est une méthode dans laquelle plusieurs combinaisons d'hyperparamètres sont évaluées sur un ensemble de données de validation.

Différentes méthodes de recherches de combinaisons d'hyperparamètres existent. Ces méthodes incluent la recherche en grille, la recherche aléatoire et la recherche bayésienne par exemple.

Les combinaisons d'hyperparamètres sont évaluées en réalisant une phase d'entraînement du modèle d'apprentissage automatique puis une phase de test.

La phase d'entraînement est adaptée pour entraîner le modèle d'apprentissage automatique à partir d'un ensemble de données d'entraînement. La phase de test est adaptée pour calculer un score de performance associé à la combinaison d'hyperparamètres testée à partir d'un ensemble de données de test.

L'ensemble des données d'entraînement et l'ensemble des données de test sont fournies par un utilisateur. Ces données sont représentatives de l'application visée pour le modèle d'apprentissage automatique.

La quantité de données d'entraînement impacte la durée de la phase d'entraînement. Plus les données d'entraînement sont nombreuses, plus la phase d'entraînement est longue. Ainsi, la recherche d'une combinaison optimale d'hyperparamètres peut prendre un temps relativement long lorsque la quantité de données d'entraînement est importante.

En outre, certaines combinaisons d'hyperparamètres recherchées peuvent être complexes. Ces combinaisons complexes d'hyperparamètres impliquent une phase d'entraînement plus longue.

Or, certaines combinaisons complexes d'hyperparamètres sont peu performantes. Néanmoins, même si une combinaison est peu performante, il est nécessaire d'effectuer une phase d'entraînement afin de déterminer la performance de ces combinaisons complexes d'hyperparamètres.

L'évaluation de certaines combinaisons complexes d'hyperparamètres est donc chronophage si leur performance calculée s'avère insuffisante.

Il existe donc un besoin de proposer une solution permettant de réduire la durée de la recherche de la combinaison optimale d'hyperparamètres, notamment lorsque la quantité de données d'entraînement fournies par un utilisateur est importante.

Selon un aspect, il est proposé un procédé mis en oeuvre par ordinateur de recherche d'une combinaison optimale d'hyperparamètres permettant de définir un modèle d'apprentissage automatique, le procédé comprenant plusieurs tests de combinaison d'hyperparamètres, chaque test de combinaison d'hyperparamètres comportant une phase d'entraînement et une phase de test, la phase d'entraînement étant adaptée pour entraîner le modèle d'apprentissage automatique à partir de données d'entraînement et la phase de test étant adaptée pour calculer un score de performance associé à la combinaison d'hyperparamètres testée à partir de données de test, la combinaison optimale d'hyperparamètres correspondant à la combinaison d'hyperparamètres ayant obtenu le meilleur score de performance parmi les combinaisons d'hyperparamètres testées,
le procédé comprenant en outre une définition d'un coefficient de pondération permettant d'ajuster la quantité de données d'entraînement utilisées pour la phase d'entraînement, ledit coefficient de pondération étant adapté dynamiquement au cours des différents tests des combinaisons d'hyperparamètres.

Dans un tel procédé, la phase d'entraînement des tests de combinaisons d'hyperparamètres est réalisée avec des données d'entraînement dont la quantité est ajustée dynamiquement.

La quantité des données d'entraînement pour une phase d'entraînement est ajustée dynamiquement pour utiliser qu'un nombre réduit de données d'entraînement pour certains tests de combinaison d'hyperparamètres de manière à accélérer le procédé de recherche d'une combinaison optimale d'hyperparamètres.

En effet, il n'est pas nécessaire d'entraîner le modèle d'apprentissage automatique avec l'ensemble des données d'entraînement pour mesurer une approximation de la performance d'une combinaison d'hyperparamètres.

En particulier, une portion des données d'entraînement suffit généralement pour mesurer une approximation de la performance d'une combinaison d'hyperparamètres. Par exemple, une portion correspondant à 10% des données d'entraînement permet d'obtenir une approximation de la performance d'une combinaison d'hyperparamètres.

Le fait d'utiliser seulement une portion des données d'entraînement permet d'effectuer plus rapidement la phase d'entraînement. La phase d'entraînement des tests des combinaisons d'hyperparamètres correspond à l'étape du procédé de recherche prenant le plus de temps à réaliser.

De ce fait, le fait de réduire le temps d'exécution des phases d'entraînement permet également de réaliser plus rapidement le procédé de recherche de combinaison d'hyperparamètres pour un nombre donné de combinaison d'hyperparamètres à tester, ou bien d'augmenter le nombre de combinaison d'hyperparamètres à tester pour une période donnée d'exécution du procédé de recherche de combinaison d'hyperparamètres.

Le fait d'utiliser l'ensemble des données de test fournies par l'utilisateur pour évaluer la performance de la combinaison d'hyperparamètres permet de s'assurer que l'ensemble des combinaisons d'hyperparamètres testées sont évaluées de la même manière.

Une fois la combinaison optimale d'hyperparamètres trouvée, le modèle optimal peut être entraîné avec l'ensemble des données d'entraînement, de manière à obtenir la meilleure performance de ce modèle d'apprentissage automatique. Ainsi, la qualité du modèle optimal est garantie.

Avantageusement, le coefficient de pondération est initialisé à un coefficient de pondération initial.

De préférence, le coefficient de pondération initial est inférieur ou égal à 1.

Avantageusement, ledit coefficient de pondération est mis à jour pour chaque test de combinaison d'hyperparamètres.

Dans un mode de mise en oeuvre avantageux, la mise à jour du coefficient de pondération à utiliser pour un test donné de combinaison d'hyperparamètres comprend un calcul d'un nouveau coefficient de pondération à partir d'un ancien coefficient de pondération utilisé lors du test de combinaison d'hyperparamètres précédant directement ledit test donné de combinaison d'hyperparamètres.

De préférence, le nouveau coefficient de pondération est calculé par la formule k*α, où α est l'ancien coefficient de pondération et k est un coefficient supérieur à 1, par exemple compris entre 1 et 2.

Un tel calcul du nouveau coefficient de pondération permet d'augmenter progressivement la quantité de données d'entraînement prises en compte durant la phase d'entraînement. Cela permet de privilégier des coefficients de pondération relativement petits tout en conservant également quelques coefficients plus élevés. En particulier, une telle mise à jour du coefficient de pondération permet d'augmenter de manière exponentielle la quantité des données d'entraînement.

En variante, il est possible de calculer le nouveau coefficient de pondération en ajoutant une valeur donnée à l'ancien coefficient de pondération. Il est par exemple possible d'ajouter une valeur de 1% à l'ancien coefficient de pondération pour obtenir le nouveau coefficient de pondération.

Dans un mode de mise en oeuvre avantageux, le procédé comprend en outre une définition d'un meilleur coefficient de pondération défini dynamiquement, ce meilleur coefficient de pondération correspondant au coefficient de pondération utilisé pour la phase d'entraînement du test de la combinaison d'hyperparamètres ayant obtenu le meilleur score de performance parmi les combinaisons d'hyperparamètres déjà testées.

De préférence, la mise à jour du coefficient de pondération comprend une comparaison du nouveau coefficient de pondération à la valeur 100% et à la valeur w*A, où A est le meilleur coefficient de pondération défini et w est un coefficient supérieur à 1, par exemple compris entre 2 et 8, notamment égal à 4, le coefficient de pondération étant mis à jour à la valeur du nouveau coefficient de pondération si le nouveau coefficient de pondération calculé est inférieur ou égal à la valeur 100% ou à la valeur w*A, ou bien mis à jour à la valeur du coefficient de pondération initial sinon.

Une telle mise à jour du coefficient de pondération permet d'éviter que le coefficient de pondération soit trop élevé en début de recherche d'une combinaison optimale d'hyperparamètres. Une telle mise à jour du coefficient de pondération permet également de tester des coefficients de pondération plus élevés que le meilleur coefficient de pondération, le nouveau de coefficient de pondération ne pouvant être supérieur à w*A. Une telle mise à jour du coefficient de pondération permet d'augmenter progressivement le coefficient de pondération.

Dans un mode de réalisation avantageux, le procédé comprend un outre un entraînement d'un modèle d'apprentissage automatique défini par ladite combinaison optimale d'hyperparamètres avec l'ensemble des données d'entraînement.

En variante ou en combinaison, le procédé comprend en outre, pour chaque modèle d'apprentissage automatique défini par une combinaison d'hyperparamètres ayant permis d'obtenir un meilleur score de performance parmi les combinaisons d'hyperparamètres déjà testées, un entraînement de ce modèle avec l'intégralité des données d'entraînement à chaque fois qu'un meilleur score de performance est obtenu.

Selon un autre aspect, il est proposé un produit programme d'ordinateur comprenant des instructions qui, lorsque le programme est exécuté par un ordinateur, conduisent celui-ci à mettre en oeuvre un procédé tel que décrit précédemment.

Selon un autre aspect, il est proposé un système informatique comprenant :
- une mémoire dans laquelle est stocké un programme d'ordinateur tel que décrit précédemment, et
- une unité de traitement configurée pour mettre en oeuvre le programme d'ordinateur.

D'autres avantages et caractéristiques de l'invention apparaîtront à l'examen de la description détaillée de modes de réalisation, nullement limitatifs, et des dessins annexés sur lesquels :
[Fig 1]

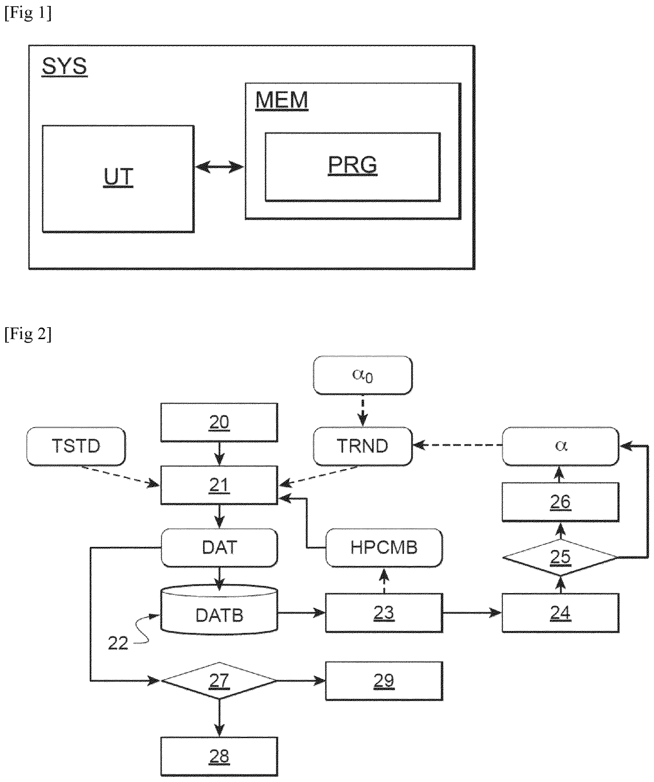

[Fig 2] illustrent des modes de réalisation et de mise en oeuvre de l'invention.

La figure 1 illustre un système informatique SYS configuré pour mettre en oeuvre un procédé de recherche d'une combinaison optimale d'hyperparamètres tel que décrit dans la suite en relation avec la figure 2.

Le système informatique SYS comprend une unité de traitement UT et une mémoire MEM.

La mémoire MEM est notamment une mémoire non volatile.

La mémoire MEM est configurée pour stocker un programme d'ordinateur PRG. Ce programme d'ordinateur PRG comprend des instructions qui lorsqu'elles sont exécutées par l'unité de traitement UT, conduisent celle-ci à mettre en oeuvre le procédé tel que décrit dans la suite.

Le système informatique SYS peut par exemple être un serveur ou un ordinateur personnel.

La figure 2 illustre un procédé pour rechercher une combinaison optimale d'hyperparamètres pour un modèle d'apprentissage automatique. Un tel procédé peut être mis en oeuvre par un système informatique SYS tel que décrit précédemment.

Le modèle d'apprentissage automatique est choisi selon une application définie par un utilisateur. Le modèle peut être un modèle linéaire, un arbre de décision ou un réseau de neurones artificiels par exemple.

Il est important de noter que ces modèles ne sont pas exhaustifs et qu'il existe de nombreux autres modèles d'apprentissage automatique utilisés pour résoudre différents types de problèmes à résoudre relatifs à l'application définie par l'utilisateur.

Le modèle d'apprentissage automatique est associé à une combinaison d'hyperparamètres. Afin d'obtenir un modèle d'apprentissage automatique ayant une bonne performance, il convient de rechercher une combinaison optimale d'hyperparamètres pour ce modèle d'apprentissage automatique.

En particulier, chaque combinaison d'hyperparamètres recherchée est testée pour mesurer une performance de cette combinaison d'hyperparamètres.

La combinaison optimale d'hyperparamètres correspond à la combinaison d'hyperparamètres obtenant un meilleur score de performance parmi un ensemble de combinaison d'hyperparamètres recherchés.

Plus particulièrement, le procédé comprend une étape 20 d'initialisation. Dans cette étape d'initialisation, une première combinaison d'hyperparamètres est générée de manière aléatoire.

Dans cette étape 20 d'initialisation, un meilleur score est initialisé à une valeur prédéfinie, par exemple 0.

Comme cela est décrit dans la suite, au cours du procédé de recherche de combinaison optimale d'hyperparamètres, le meilleur score est mis à jour dès qu'un score de performance d'un test de combinaison d'hyperparamètres est supérieur à l'ancien meilleur score défini. Le meilleur score est alors mis à jour par ce score de performance.

Le procédé comprend ensuite une étape 21 d'évaluation. Comme cela est décrit dans la suite, cette étape 21 d'évaluation est réalisée pour chaque combinaison d'hyperparamètres recherchées. Dans cette étape 21 d'évaluation, une performance de la combinaison d'hyperparamètres à tester est évaluée.

Par exemple, l'évaluation de la performance d'une combinaison d'hyperparamètres peut être réalisée par une méthode de validation croisée bien connue de l'homme du métier.

La validation croisée peut être choisie parmi les validations de type « Leave p out cross-validation », « Leave one out cross-validation », « Holdout cross-validation », « Repeated random subsampling validation », « k-fold cross-validation », « Stratified k-fold cross-validation », « Time Series cross-validation », « Nested cross-validation ».

Plus particulièrement, l'évaluation de la performance d'une combinaison d'hyperparamètres comprend une phase d'entraînement du modèle d'apprentissage automatique et une phase de test du modèle d'apprentissage automatique.

La phase d'entraînement du modèle d'apprentissage automatique utilise des données d'entraînement TRND. Les données d'entraînement sont fournies par l'utilisateur.

Plus particulièrement, la quantité de données d'entraînement TRND utilisées pour la phase d'entraînement dépend d'un coefficient de pondération α inférieur ou égal à 100%.

Le coefficient de pondération α permet de sélectionner une portion des données d'entraînement fournies par l'utilisateur. Le rapport entre une taille de cette portion des données d'entraînement et une taille de l'ensemble des données d'entraînement correspond au coefficient de pondération α.

Les données d'entraînement de ladite portion peuvent être sélectionnées aléatoirement.

Le coefficient de pondération α est initialisé à un coefficient de pondération initial α₀ renseigné par l'utilisateur. De préférence, le coefficient de pondération initial α₀ est proche de 0%. Par exemple, le coefficient de pondération initial α₀ peut être initialisé à 1%.

De cette manière, la quantité de données d'entraînement utilisées pour l'évaluation de la première combinaison d'hyperparamètres est relativement faible.

Le coefficient de pondération α évolue ensuite au cours du procédé de recherche de la combinaison optimale d'hyperparamètres jusqu'à approcher 100% à la fin de la recherche de la combinaison optimale d'hyperparamètres.

Il est également possible d'imposer une quantité minimale de données d'entraînement à utiliser pour la phase d'entraînement. En particulier, lorsque le modèle entraîné est un modèle de classification, il est possible de prévoir, pour chaque classe définie, un minimum d'échantillons représentatifs de cette classe, par exemple 50 échantillons.

La phase de test du modèle d'apprentissage automatique utilise un ensemble des données de test TSTD fournies par l'utilisateur pour évaluer la performance de la combinaison d'hyperparamètres.

La quantité de données de test utilisées lors des évaluations des différentes combinaisons d'hyperparamètres recherchées est toujours la même.

De préférence, la phase de test de chaque étape d'évaluation utilise toutes les données de test TSTD fournies par l'utilisateur pour évaluer la performance de la combinaison d'hyperparamètres. Cela permet de s'assurer que l'ensemble des combinaisons d'hyperparamètres testées sont évaluées de la même manière.

L'étape d'évaluation permet de calculer un score de performance associé à la combinaison d'hyperparamètres. Le score de performance calculée, la combinaison d'hyperparamètres testée et le coefficient de pondération α forme un ensemble de données DAT délivré en sortie de l'étape 21 d'évaluation.

Le score de performance calculée, la combinaison d'hyperparamètres testée et le coefficient de pondération α utilisé sont stockés lors d'une étape 22 dans une partie DATB de la mémoire MEM du système informatique SYS.

Le procédé comprend ensuite une étape 23 de recherche d'une nouvelle combinaison d'hyperparamètres. Dans cette étape, une nouvelle combinaison d'hyperparamètres est recherchées.

La nouvelle combinaison d'hyperparamètres est recherchée à l'aide d'un algorithme de recherche bien connu de l'homme du métier.

Par exemple, l'algorithme de recherche peut être choisi parmi une recherche en grille, une recherche aléatoire ou encore une recherche bayésienne.

La recherche d'une nouvelle combinaison d'hyperparamètres permet d'obtenir une nouvelle combinaison d'hyperparamètres HPCMB qui sera testé par la suite en réitérant le procédé à partir de l'étape 21 d'évaluation.

Le procédé comprend également une étape 24 de calcul d'un nouveau coefficient de pondération. Ce nouveau coefficient de pondération sera utilisé pour la prochaine itération de l'étape 21 d'évaluation si sa valeur répond aux conditions définies à l'étape 25 de vérification décrite ci-après.

En particulier, le nouveau coefficient de pondération α est calculé à partir de l'ancien coefficient de pondération α. Par exemple, le nouveau coefficient de pondération α correspond à la valeur k*α, où α est l'ancien coefficient de pondération et k est un coefficient supérieur à 1 défini par l'utilisateur, par exemple compris entre 1 et 2.

Un tel calcul du nouveau coefficient de pondération permet d'augmenter progressivement la quantité de données d'entraînement prises en compte durant la phase d'entraînement. Cela permet de privilégier des coefficients de pondération relativement petits tout en conservant également quelques coefficients plus élevés.

En variante, il est possible de calculer le nouveau coefficient de pondération en ajoutant une valeur donnée à l'ancien coefficient de pondération. Il est par exemple possible d'ajouter une valeur de 1% à l'ancien coefficient de pondération pour obtenir le nouveau coefficient de pondération.

Le procédé comprend ensuite une étape 25 de vérification. Dans cette étape 25, le nouveau coefficient de pondération est comparé à deux seuils. En particulier, le nouveau coefficient de pondération α est comparé à 100% et à une valeur w*A, où A correspond à un meilleur coefficient de pondération, et w est un coefficient supérieur à 1 défini par l'utilisateur. Le coefficient w est par exemple compris entre 2 et 8, notamment égal à 4.

Le meilleur coefficient de pondération A correspond au coefficient de pondération α utilisée pour évaluer la combinaison d'hyperparamètres ayant permis d'obtenir le dernier meilleur score parmi les combinaisons d'hyperparamètres déjà testées.

Si le nouveau coefficient de pondération α est supérieur à 100% ou à la valeur w*A, alors le nouveau coefficient de pondération est modifié lors d'une étape 26 pour être égal au coefficient de pondération initial.

Si le nouveau coefficient de pondération α est inférieur ou égal à 100% ou à la valeur w*A, alors le nouveau coefficient de pondération est maintenu.

Le nouveau coefficient de pondération α défini est ensuite utilisé pour la prochaine itération de l'étape 21 d'évaluation
Suite à chaque étape 21 d'évaluation, le procédé comprend également une étape 27 de comparaison du score de performance. Dans cette étape 27, le score de performance calculée lors de l'étape 21 d'évaluation est comparé à un meilleur score de performance.

Si le score de performance calculé lors de l'étape 21 d'évaluation est supérieur au meilleur score, alors le procédé comprend une étape 28 de mise à jour du meilleur score. Dans cette étape 28, le meilleur score est mis à jour par le score de performance calculé lors de l'étape d'évaluation.

Si le score de performance calculé est supérieur au meilleur score, alors le procédé comprend également une étape 29 de mise à jour du meilleur coefficient de pondération A. Dans cette étape 29, le meilleur coefficient de pondération A est mis à jour par le coefficient de pondération α utilisé pour l'évaluation de la combinaison d'hyperparamètres ayant obtenu le score de performance supérieur au meilleur score.

Ce meilleur coefficient de pondération A est initialisé à la valeur du coefficient de pondération initial α₀.

Comme indiqué précédemment, pour chaque nouvelle combinaison d'hyperparamètres recherchée, le procédé est réitéré à partir de l'étape 21 d'évaluation pour évaluer la nouvelle combinaison d'hyperparamètres.

Néanmoins, la phase d'entraînement de chaque étape 21 d'évaluation est réalisée à partir de données d'entraînement dont la quantité dépend du coefficient de pondération α qui est augmenté à chaque itération de l'étape d'évaluation jusqu'à atteindre 100% ou la valeur w*A.

Cela permet d'augmenter la quantité de données d'entraînement prises en compte durant la phase d'entraînement de l'étape d'évaluation au cours des différentes itérations de l'étape 21 d'évaluation, jusqu'à ce que le coefficient de pondération atteigne 100% ou la valeur w*A. En particulier, un tel procédé permet d'augmenter progressivement la quantité de données d'entraînement prises en compte durant la phase d'entraînement. En outre, un tel procédé utilise un plafond dynamique fixé par la valeur w*A. De la sorte, l'augmentation exponentielle du coefficient de pondération n'atteint pas 100% à chaque itération, en particulier au début du procédé. Plus particulièrement, le plafond w*A augmente globalement au cours du procédé. Néanmoins, la valeur de A peut diminuer localement. Dans ce cas, le plafond diminue également localement. Ainsi, l'augmentation du plafond w*A n'est pas exponentielle, mais est liée au coefficient de pondération qui a permis d'obtenir un nouveau meilleur score de performance.

Dans un tel procédé, la phase d'entraînement des étapes d'évaluation des combinaisons d'hyperparamètres est réalisée avec des données d'entraînement dont la quantité est ajustée dynamiquement.

La quantité des données d'entraînement pour une phase d'entraînement est ajustée dynamiquement pour utiliser qu'un nombre réduit de données d'entraînement pour certains tests de combinaison d'hyperparamètres de manière à accélérer le procédé de recherche d'une combinaison optimale d'hyperparamètres.

En effet, il n'est pas nécessaire d'entraîner le modèle d'apprentissage automatique avec l'ensemble des données d'entraînement pour mesurer une approximation de la performance d'une combinaison d'hyperparamètres.

En particulier, une portion des données d'entraînement suffit généralement pour mesurer une approximation de la performance d'une combinaison d'hyperparamètres. Par exemple, une portion correspondant à 10% des données d'entraînement permet d'obtenir une approximation suffisante de la performance d'une combinaison d'hyperparamètres.

Le fait d'utiliser seulement une portion des données d'entraînement permet d'effectuer plus rapidement la phase d'entraînement de l'étape d'évaluation. La phase d'entraînement des étapes d'évaluation des combinaisons d'hyperparamètres correspond à l'étape du procédé de recherche prenant le plus de temps à réaliser.

De ce fait, le fait de réduire le temps d'exécution des phases d'entraînement permet également de réaliser plus rapidement le procédé de recherche de combinaison d'hyperparamètres pour un nombre donné de combinaison d'hyperparamètres à tester, ou bien d'augmenter le nombre de combinaison d'hyperparamètres à tester pour une période donnée d'exécution du procédé de recherche de combinaison d'hyperparamètres.

Une fois la combinaison optimale d'hyperparamètres trouvée, le modèle optimal peut être entraîné avec l'ensemble des données d'entraînement, de manière à obtenir la meilleure performance de ce modèle d'apprentissage automatique. Ainsi, la qualité de ce modèle optimal est garantie.

En variante ou en combinaison, il est également possible d'entraîner le modèle avec l'intégralité des données d'entraînement à chaque fois qu'un nouveau meilleur score est obtenue. Cet entraînement peut être réalisé en parallèle des itérations des étapes 21 à 29. Un tel entraînement permet de garantir la qualité de chaque modèle entraîné avec l'intégralité des données d'entraînement. En outre, il est possible pour l'utilisateur de stopper les itérations des étapes 21 à 29 dès qu'il considère qu'un modèle entraîné est suffisamment performant.

## Revendications

1. Procédé mis en oeuvre par ordinateur de recherche d'une combinaison optimale d'hyperparamètres permettant de définir un modèle d'apprentissage automatique, le procédé comprenant plusieurs tests (21) de combinaison d'hyperparamètres, chaque test de combinaison d'hyperparamètres comportant une phase d'entraînement et une phase de test, la phase d'entraînement étant adaptée pour entraîner le modèle d'apprentissage automatique à partir de données d'entraînement et la phase de test étant adaptée pour calculer un score de performance associé à la combinaison d'hyperparamètres testée à partir de données de test, la combinaison optimale d'hyperparamètres correspondant à la combinaison d'hyperparamètres ayant obtenu le meilleur score de performance parmi les combinaisons d'hyperparamètres testées,
le procédé comprenant en outre une définition d'un coefficient de pondération (α) permettant d'ajuster la quantité de données d'entraînement utilisées pour la phase d'entraînement, ledit coefficient de pondération étant adapté dynamiquement (24, 26) au cours des différents tests des combinaisons d'hyperparamètres

2. Procédé selon la revendication 1, dans lequel le coefficient de pondération (α) est initialisé à un coefficient de pondération initial (α₀).

3. Procédé selon la revendication 2, dans lequel le coefficient de pondération initial (α₀) est inférieur ou égal à 1%.

4. Procédé selon l'une des revendications 1 à 3 dans lequel ledit coefficient de pondération (α) est mis à jour (24, 26) pour chaque test (21) de combinaison d'hyperparamètres.

5. Procédé selon la revendication 4, dans lequel la mise à jour du coefficient de pondération (α) à utiliser pour un test donné de combinaison d'hyperparamètres comprend un calcul (24) d'un nouveau coefficient de pondération à partir d'un ancien coefficient de pondération utilisé lors du test de combinaison d'hyperparamètres précédant directement ledit test donné de combinaison d' hyperparamètres.

6. Procédé selon la revendication 5, dans lequel le nouveau coefficient de pondération est calculé par la formule k*α, où α est l'ancien coefficient de pondération et k est un coefficient supérieur à 1.

7. Procédé selon l'une des revendications 1 à 6, comprenant en outre une définition d'un meilleur coefficient de pondération défini dynamiquement, ce meilleur coefficient de pondération correspondant au coefficient de pondération utilisé pour la phase d'entraînement du test de la combinaison d'hyperparamètres ayant obtenu le meilleur score de performance parmi les combinaisons d'hyperparamètres déjà testées.

8. Procédé selon la revendication 7 dans lequel la mise à jour du coefficient de pondération comprend une comparaison du nouveau coefficient de pondération à la valeur 100% et à la valeur w*A, où A est le meilleur coefficient de pondération défini et w est un coefficient supérieur à 1, le coefficient de pondération étant mis à jour à la valeur du nouveau coefficient de pondération si le nouveau coefficient de pondération calculé est inférieur ou égal à la valeur 100% ou à la valeur w*A, ou bien mis à jour à la valeur du coefficient de pondération initial sinon.

9. Procédé selon l'une des revendications 1 à 8, comprenant un outre un entraînement d'un modèle d'apprentissage automatique défini par ladite combinaison optimale d'hyperparamètres avec l'ensemble des données d'entraînement.

10. Procédé selon l'une des revendications 1 à 9, comprenant en outre, pour chaque modèle d'apprentissage automatique défini par une combinaison d'hyperparamètres ayant permis d'obtenir un meilleur score de performance parmi les combinaisons d'hyperparamètres déjà testées, un entraînement de ce modèle avec l'intégralité des données d'entraînement à chaque fois qu'un meilleur score de performance est obtenu.

11. Produit programme d'ordinateur comprenant des instructions qui, lorsque le programme est exécuté par un ordinateur, conduisent celui-ci à mettre en oeuvre un procédé selon l'une des revendications 1 à 10.

12. Système informatique comprenant :
- une mémoire (MEM) dans laquelle est stocké un programme d'ordinateur (PRG) selon la revendication 11, et
- une unité de traitement (UT) configurée pour mettre en oeuvre le programme d'ordinateur (PRG).
